# DEMANDE DE BREVET EUROPEEN

(11) **EP 2 883 689 A1**
(43) Date de publication de la demande: **17.06.2015**
(21) Numéro de dépôt: 14197494.9
(22) Date de dépôt: 11.12.2014
(51) Int. Cl.: B29D 12/02, C08J 3/18, C08J 3/20, C08J 5/04, C08K 5/00, C08K 5/11, C08K 5/49, C08L 1/12, C08L 97/02, G02C 5/00, B29C 45/00, C08K 5/521, B29L 12/00, B29K 1/00

(54) **Matériau, élément de monture ophtalmique, utilisations et procédés de fabrication associés**

(30) Priorité: 12.12.2013 FR 1362467
(71) Demandeur: Mocquard, Antoine, 75020 Paris (FR); Tual, Julien, 75011 Paris (FR)
(72) Inventeur: Mocquard, Antoine, 75020 Paris (FR); Tual, Julien, 75011 Paris (FR)
(74) Mandataire: Vidon Brevets & Stratégie

(57) **Abrégé**

Matériau, notamment pour accessoire de mode, particulièrement pour une monture ophtalmique, comprenant de l'acétate de cellulose, au moins un plastifiant, et entre 1 et 10%, préférentiellement entre 4 et 6%, en masse dudit matériau, de particules de bois.

## Description

### 1. Domaine de l'invention

Le domaine de l'invention est celui notamment des accessoires de mode, particulièrement de la lunetterie et plus particulièrement des montures ophtalmiques.

Plus précisément, l'invention concerne un matériau comprenant un mélange d'acétate de cellulose, de plastifiants, et de particules de bois. Ce matériau peut être injecté sous forme de plaques puis usiné de manière à obtenir des objets, notamment des accessoires de mode telles que des montures ophtalmiques, ayant l'aspect esthétique du bois tout en conservant des caractéristiques techniques proches de celles de l'acétate. L'invention concerne également un élément de monture ophtalmique comprenant ledit matériau, un procédé d'obtention de montures et/ou éléments de montures ophtalmiques, ainsi que l'utilisation d'un mélange spécifique pour l'obtention d'éléments de monture ophtalmique.

### 2. Solutions de l'art antérieur

L'acétate de cellulose est un polymère thermoplastique obtenu à partir de composants d'origine végétale, tels que le coton. Dénommé viscose, soie artificielle ou rayonne lorsque présent sous forme de fibres, ce matériau présente de nombreuses caractéristiques techniques et esthétiques qui en font un candidat de choix pour la confection de montures de lunette.

D'un point de vue mécanique, l'acétate de cellulose bénéficie en premier lieu d'une grande élasticité et d'une bonne résistance aux déformations plastiques, conférant ainsi aux objets qui en sont constitués une grande résistance à la traction, à la flexion et aux chocs mécaniques. Ce polymère dispose également de caractéristiques thermiques lui permettant d'être aisément travaillé à chaud et sous pression. Lorsque présent sous forme de granulés, l'acétate de cellulose peut ainsi être rapidement et à moindre coût mis en forme par un procédé d'injection, gardant par la suite l'empreinte exacte des surfaces de moule à l'échelle microscopique. Enfin, ce polymère présente une bonne comptabilité avec de nombreux plastifiants et colorants, permettant ainsi la modification de ses caractéristiques techniques et/ou de son apparence en fonction des charges qui y sont incorporées. Par exemple, la demande PCT WO2012/004727 décrit un matériau comprenant un mélange d'acétate de cellulose et de plastifiants.

Selon une approche différente, de nombreux créateurs d'accessoires de mode telles que des lunettes optent pour la réalisation de montures de lunette en bois. Originales par leur aspect visuel, les montures en bois sont également très agréables au toucher et entièrement biodégradables. Les montures en bois ont cependant pour inconvénient d'être considérablement plus fragiles que les montures en acétate, d'où une diminution significative de leur espérance de vie. De plus, les procédés de fabrication des montures en bois s'avèrent plus complexes que dans le cadre des montures en acétate, ce qui limite le choix des formes de monture pouvant être obtenues et tend à pousser vers le haut les coûts de production de ces dernières. Enfin, le bois, de par sa structure et sa composition, présente une mauvaise comptabilité avec des composants chimiques de nature différente. Il s'avère donc difficile d'influer sur les caractéristiques techniques et/ou l'aspect visuel de ce matériau par l'incorporation de charges diverses.

L'homme de l'art est encore confronté par conséquent au dilemme de choisir, pour l'obtention d'objets tels que des éléments de montures ophtalmiques ou autres accessoires de mode, soit un matériau ayant des propriétés mécaniques, thermiques et chimiques satisfaisantes ou des propriétés esthétiques et visuelles attrayantes. A ce jour, aucune solution satisfaisante n'a été apportée.

### 3. Objectifs de l'invention

L'invention a pour objectif de pallier à ces inconvénients de l'art antérieur.

Plus précisément, un objectif de l'invention est de fournir un matériau pour un objet tel qu'un accessoire de mode, particulièrement pour monture ophtalmique, étant esthétiquement et visuellement plaisant, mais en conservant des propriétés mécaniques, thermiques et chimiques suffisantes pour que ledit matériau soit utilisé comme matériau pour accessoire de mode tels qu'en lunetterie, et tout en étant suffisamment flexible pour adaptation à son support tel qu'un visage.

Un autre objectif de l'invention est de fournir un matériau pour un objet tel qu'un accessoire de mode, particulièrement pour monture ophtalmique, présentant une grande stabilité, et par conséquent une grande durée de vie, et/ou ne présentant pas les inconvénients inhérents à de nombreux matériaux composites dans lesquels une migration de composés chimiques au sein de la matière est observée.

Un autre objectif de l'invention est de fournir un matériau pour un objet tel qu'un accessoire de mode, particulièrement pour monture ophtalmique, biodégradable.

L'invention a encore pour objectif de mettre en oeuvre un procédé d'obtention de montures ophtalmiques constituées de ce même matériau.

### 4. Caractéristiques essentielles de l'invention

Ces objectifs, ainsi que d'autres qui apparaîtront par la suite, sont atteints par la sélection de composés spécifiques, présents dans des proportions déterminées. En effet, les inventeurs ont détecté que l'obtention d'un matériau comprenant tout à la fois de bonnes propriétés esthétiques et visuelles, mais également des propriétés mécaniques, thermiques et chimiques suffisantes, ainsi qu'une flexibilité suffisante pour adaptation à son support, nécessite la sélection de composés spécifiques. Les inventeurs ont également détectés que des composés, apparemment non susceptibles d'être utilisées ensemble, étaient compatibles et permettait d'obtenir des matériaux aux propriétés recherchées. Pour être spécifique, les inventeurs ont démontré que lesdites propriétés pouvaient être obtenues à l'aide d'un matériau - notamment pour obtention d'un objet tel qu'un accessoire de mode, particulièrement une monture ophtalmique-comprenant de l'acétate de cellulose, au moins un plastifiant, et entre 1 et 10%, préférentiellement entre 4 et 6%, en masse dudit matériau, de particules de bois. Préférentiellement, l'acétate de cellulose et ledit plastifiant sont incorporés audit matériau sous la forme d'un mélange.

L'acétate de cellulose, tel que décrit dans l'exposé des solutions de l'art antérieur, présente des propriétés physiques répondant aux exigences techniques du domaine des accessoires de mode telle que la lunetterie. L'incorporation de plastifiant au sein de l'acétate permet la création d'effets chromatiques inhabituels et la diminution de la température de fusion de l'acétate, permettant ainsi la poursuite d'opérations de transformation et de traitement de l'acétate à une température inférieure à celle à laquelle des décompositions partielles de la matière et la formation de couleurs sombres peuvent apparaître. Le plastifiant le plus communément utilisé à cet effet est le phthalate diéthyle (DEP) qui a pour avantages d'une part d'avoir un pouvoir plastifiant avec l'acétate de cellulose suffisamment élevé pour produire, même lorsqu'incorporé en faible quantité dans l'acétate, les effets techniques mentionnés ci-dessus, et d'autre part de ne pas engendrer l'apparition d'effets chromatiques non désirés au sein du produit semi-fini.

L'incorporation de particules de bois dans le mélange d'acétate de cellulose et de plastifiant permet de doter ce mélange d'un aspect esthétique et/ou visuel similaire à celui du bois. Cependant, les inventeurs ont détecté que les particules de bois devaient être incorporées dans une gamme de valeur spécifique. Il a été déterminé que la concentration minimale nécessaire à l'apparition effective d'un aspect visuel de bois est de 1% de particules de bois, en masse dudit matériau. Dans le même temps, l'ajout de particules de bois dans l'acétate engendre une dégradation des propriétés physiques de l'acétate, ce qui peut porter préjudice à la qualité finale des accessoires de mode telles que les montures ophtalmiques qui en sont constituées. Il est donc primordial de rester dans une plage de concentration massique des particules de bois dans l'acétate permettant à la fois l'existence d'un aspect visuel de bois et la conservation d'une proportion satisfaisante des propriétés physiques de l'acétate de cellulose. Dans cette optique, il a été déterminé expérimentalement que la concentration maximale de particules de bois permettant la conservation de propriétés physiques satisfaisantes est de 10% en masse dudit matériau. Préférentiellement, le meilleur compromis entre aspect visuel de bois et propriétés physiques de la matière est obtenu pour une concentration en particules de bois comprise entre 4 et 6% en masse dudit matériau.

Les inventeurs ont également détectés qu'il était souhaitable d'incorporer des particules de bois ayant des caractéristiques physiques spécifiques, notamment vis-à-vis de leur taille. Ainsi, il est préférable d'incorporer des particules de bois caractérisées par leur envergure, qui peut être définie comme la distance séparant les deux points les plus éloignés l'un de l'autre d'une particule, c'est-à-dire la taille maximale d'une particule.

Selon une caractéristique particulière, les particules de bois ont une envergure inférieure à 1000 micromètres. Le respect de cette limite dimensionnelle des particules de bois permet de garantir une bonne incorporation de ces dernières au sein du matériau.

Selon une caractéristique particulière, lesdites particules de bois ont une envergure comprise entre 300 et moins de 500 micromètres. Ainsi, l'ajout de particules de bois d'une envergure comprise entre 300 et moins de 500 micromètres permet la coloration de l'acétate dans la couleur de l'essence de bois choisie.

Selon une caractéristique particulière, lesdites particules de bois ont une envergure comprise entre 500 et 900 micromètres. Ainsi, l'ajout de particules de bois d'une envergure comprise entre 500 et 900 micromètres permet l'apparition dans l'acétate de zones hétérogènes ayant la couleur de l'essence de bois choisie et confère à la matière une granulosité permettant un aspect « bois » plus réaliste et naturel tant visuellement que tactilement.

Selon une caractéristique particulière, les inventeurs ont démontré qu'il était particulièrement préféré de sélectionner des particules de bois, qui en plus d'être présentes dans une proportion spécifique en masse du matériau, sont constituées d'un mélange de deux types spécifiques de particules, le premier type étant des particules de bois d'une envergure comprise entre 300 et moins de 500 micromètres et le deuxième type étant des particules de bois d'une envergure comprise entre 500 et 900 micromètres, lesdites particules étant en plus présentes respectivement dans un ratio massique spécifique, c'est-à-dire un ratio massique compris entre 0,80 et 1,20, préférentiellement entre 0,90 et 1,10. Ainsi, le mélange dans une proportion déterminée de ces deux types spécifiques de particules de bois selon un ratio massique spécifique compris entre 0,80 et 1,20 permet de donner au matériau tant l'aspect visuel qu'esthétique du bois en général, en combinant entre elles les similitudes liées à sa couleur et à la présence à sa surface de zones hétérogènes. Préférentiellement, l'aspect visuel le plus proche de celui du bois est obtenu pour un ratio massique compris entre 0,80 et 1,20. En plus, les inventeurs ont démontré que ce mélange était particulièrement compatible avec l'acétate de cellulose, et permettait d'obtenir un matériau, et par conséquent des éléments de monture ophtalmiques, ayant des propriétés mécaniques, thermiques et chimiques supérieures.

Selon une caractéristique particulière, le matériau comprend de l'acétate de cellulose et au moins un plastifiant, ledit plastifiant étant incorporé dans ledit matériau sous la forme d'un mélange. La proportion de plastifiant est préférentiellement comprise entre 33 et 39%, préférentiellement entre 35 et 37%, en masse dudit mélange d'acétate de cellulose. Ainsi, les effets techniques liés à l'incorporation de plastifiant et décrits ci-dessus (création d'effets chromatiques inhabituels, diminution de la température de fusion de l'acétate) sont observés de manière effective dans ces plages de concentration comprises entre 33 et 39%, et préférentiellement entre 35 et 37%, en masse dudit mélange d'acétate de cellulose.

Selon une caractéristique particulière, ledit plastifiant est sélectionné parmi le groupe consistant en un ester d'acide citrique et/ou un phosphate organique.

L'incorporation de phthalate diéthyle (DEP) dans l'acétate de cellulose, en tant que plastifiant, présente certains inconvénients. Le DEP tend en effet à migrer de l'acétate de cellulose vers d'autres matériaux plastiques placés à proximité, dont le polycarbonate, qui est un matériau communément utilisé dans le domaine de la lunetterie dans la fabrication de verres incassables. Il est donc préférable de ne pas utiliser des verres en polycarbonate en association avec des montures en acétate de cellulose pour lesquelles du DEP a été utilisé comme plastifiant, sous risque de voir le DEP migrer dans les verres, causant l'apparition de fêlures et rendant ces verres opaques. Le phosphate organique a pour avantage, en comparaison avec le DEP, de ne pas engendrer de problème de migration, en particulier avec les matériaux ayant une base de polycarbonate. Il est également caractérisé par une meilleure biodégradabilité que le DEP. Sa substitution au DEP permet donc de limiter les risques de migration et d'améliorer la biodégradabilité du mélange, tout en conservant les avantages liés à l'introduction de ce type de plastifiant, tels que l'amélioration des performances mécaniques et la conservation d'une neutralité chromatique. Selon une caractéristique particulière, ledit matériau ne comprend pas phthalate diéthyle.

Selon une caractéristique particulière, ledit plastifiant comprend entre 60 et 70% d'un ester d'acide citrique et respectivement entre 40 et 30% de phosphates organiques, en masse totale de plastifiant.

Ainsi, les effets techniques liés à l'incorporation de plastifiant, et plus particulièrement à l'incorporation de phosphate organique, décrits ci-dessus, sont observés de manière plus significative lorsque le plastifiant comprend entre 60 et 70% d'un ester d'acide citrique et respectivement entre 40 et 30% de phosphates organiques, en masse totale de plastifiant.

Le matériau, selon la présente invention, est susceptible d'être utilisé pour l'obtention de divers objets communément fabriqués à base d'acétate de cellulose. Lesdits objets peuvent être des accessoires de mode tels que des boutons, des peignes, des brosses, des boucles de ceinture, des boitiers, des objets d'ornementation de tout objet de mode y inclus les vêtements, les souliers, les chapeaux, les sacs. Ledit matériau est également susceptible pour l'obtention d'objets autres que les accessoires de mode.

Les objectifs de l'invention, ainsi que d'autres qui apparaîtront par la suite, sont également atteints par la fourniture d'élément de monture ophtalmique (et éventuellement d'autres accessoires de mode, ou plus généralement tout objet communément fabriqués à base d'acétate de cellulose) comprenant un matériau comprenant un mélange d'acétate de cellulose et d'au moins un plastifiant, et entre 1 et 10%, préférentiellement entre 4 et 6%, en masse dudit matériau, de particules de bois d'une envergure inférieure à 1000 micromètres.

Les objectifs de l'invention, ainsi que d'autres qui apparaîtront par la suite, sont également atteints à l'aide d'un procédé d'obtention de montures et/ou éléments de montures ophtalmiques caractérisé en ce qu'il comprend les étapes suivantes:
- mélange d'acétate de cellulose, d'au moins un plastifiant, et de particules de bois d'une envergure inférieure à 1000 micromètres et dont la concentration est comprise entre 1% et 10%, préférentiellement entre 4 et 6%, en masse dudit mélange.
- mise en fusion dudit mélange,
- extrusion dudit mélange pour l'obtention d'un fil,
- refroidissement dudit fil,
- découpe dudit fil refroidi en granulés,
- injection desdits granulés en plaques,
- refroidissement desdites plaques,
- usinage des dites plaques en montures et/ou éléments de montures ophtalmiques.

Ce procédé présente, entre autres, une singularité en ce que le mélange en fusion n'est pas directement injecté sous la forme d'éléments de monture ophtalmique. A la suite de tests empiriques, il a en effet été observé que les éléments de monture obtenus directement par injection du mélange ne présentaient pas les caractéristiques techniques et l'aspect visuel escomptés. Afin de pallier à cette difficulté technique, le procédé a été enrichi d'étapes d'extrusion du mélange pour l'obtention d'un fil, de refroidissement de ce fil, de découpe de ce fil en granulés, d'injection de ces granulés en plaques et d'usinage de ces plaques pour l'obtention d'éléments de monture ophtalmique. Ces étapes qui à première vue semblent rendre inutilement l'ensemble du procédé plus complexe, plus chronophage et plus coûteux, contribuent en réalité à l'obtention d'éléments de monture ophtalmique de meilleure qualité.

Selon une caractéristique particulière, le procédé comprend une étape de passage dudit mélange au travers de deux vis sans fin engrenées.

Ainsi, l'introduction d'une telle étape engendre une répartition plus homogène du plastifiant et des particules de bois au sein du mélange d'acétate, d'où une amélioration des caractéristiques techniques et de l'aspect visuel des éléments de montures obtenus à la fin du procédé.

Selon une caractéristique particulière, ladite étape de mise en fusion dudit mélange est réalisée à une température comprise entre 150°C et 200°C, préférentiellement entre 160°C et 185°C.

Les objectifs de l'invention sont également atteints par l'utilisation d'un matériau comprenant de l'acétate de cellulose, au moins un plastifiant, et des particules de bois d'une envergure inférieure à 1000 micromètres dont la concentration est comprise entre 1% et 10%, préférentiellement entre 4 et 6%, en masse dudit matériau, pour l'obtention d'éléments de monture ophtalmique.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et un dessin annexé, à savoir :

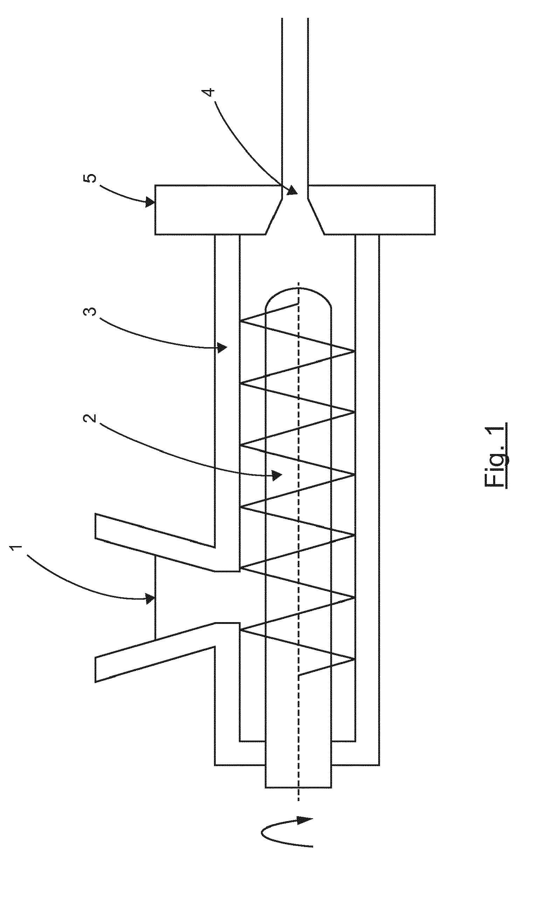

- la figure 1 qui illustre synoptiquement un procédé de filage selon un mode de réalisation de l'invention.

### 6. Description d'un mode de réalisation de l'invention

Sur la figure 1, les échelles et proportions ne sont pas strictement respectées et ce, à des fins d'illustration et de clarté.

### Composition du matériau

Le matériau faisant l'objet de l'invention comprend de l'acétate de cellulose, au moins un plastifiant et des particules de bois.

Une solution d'acétate de cellulose est obtenue à la suite de l'extraction, de la purification et du séchage de cellulose de bois ou de coton, puis de son mélange avec divers composants chimiques. Cette solution d'acétate de cellulose est mélangée avec au moins un plastifiant, selon une proportion de plastifiant de 36% en masse du mélange. Ce même plastifiant est composé d'un mélange d'acetyl triethyl citrate et de phosphate organique, selon des proportions respectivement égales à 65% et 35% en masse de plastifiant. Le mélange est ensuite extrudé selon un procédé de filage, refroidi et découpé en granulés.

Les particules de bois peuvent avoir pour origine des sciures et/ou des copeaux de bois d'épicéa ou d'hêtre, sans pour autant se limiter à ces deux essences selon d'autres modes de réalisation de l'invention. Les particules de bois, de différents envergures maximales, sont sélectionnées par passage dans un tamis mécanique comportant au moins trois cribles, ces trois cribles ayant respectivement des mailles d'un diamètre maximal de 300, 500 et 900 micromètres. Deux types de particules ayant une envergure comprise entre 300 et moins de 500 micromètres pour le premier, et entre 500 et 900 micromètres pour le deuxième, sont respectivement emprisonnés dans les cribles de 300 et 500 micromètres. La distribution des envergures maximales pour chaque type de particule est hétérogène et dépend des sciures ou copeaux de bois introduits initialement dans le tamis. Un mélange de ces deux types de particules est ensuite réalisé selon un ratio massique de 1.

A la suite du procédé d'extrusion décrit dans la suite de cette demande, le matériau obtenu est composé respectivement de 95% et de 5% en masse des mélanges décrits ci-dessus d'acétate de cellulose et de plastifiant, et de particules de bois.

### Procédé d'obtention du matériau sous la forme de granulés

Selon la figure 1, le matériau est obtenu sous la forme de granulés par un procédé d'extrusion. Ainsi, deux trémies doseuses (1), convoyant respectivement le mélange d'acétate de cellulose et de plastifiant, et le mélange de particules de bois, alimentent en continue deux vis sans fin (2) engrenées et placées dans un fourreau cylindrique thermorégulé (3). La rotation de la vis sans fin et l'action conjuguée de la température du fourreau permettent de faire passer les granulés à l'état liquide. Les deux vis sans fin malaxent, compressent, cisaillent, échauffent et transportent en continu la matière homogène en fusion vers une filière cylindrique (4), localisée au niveau de la tête d'extrusion (5), d'un diamètre de 4 mm qui définie le diamètre des granulés. A la sortie de la filière, un système de rouleaux assure le convoyage en continue de l'extrudat qui est ensuite refroidi est solidifié. Le fil obtenu est finalement découpé en continue selon une fréquence qui définie une longueur de granulé de 3 mm. Il est à noter que les dimensions des granulés obtenus sont donnés à titre indicatif et n'ont pas une influence déterminante sur les caractéristiques du matériau obtenu ou sur le procédé associé de mise en forme des éléments de monture ophtalmique.

### Procédé de mise en forme des éléments de monture ophtalmique

Selon un procédé dans un premier temps similaire à l'extrusion, le matériau sous la forme de granulés est introduit en continue dans un fourreau cylindrique thermo-régulée dans lequel ce matériau est mis en fusion et acheminé par une vis sans fin vers la tête du fourreau où il constitue une réserve de matière prête à être injectée. Dans un second temps, la matière en réserve est injectée sous forte pression à l'intérieur d'un moule présentant la forme d'une plaque rectangulaire. Une pression constante est ensuite appliquée durant un temps déterminé afin de continuer à alimenter le moule en matériau en fusion. La plaque est ensuite refroidie durant quelques secondes puis éjectée du moule. Cette plaque est par la suite découpée par une machine numérique puis façonnée selon des méthodes traditionnelles propres au domaine de la lunetterie.

## Revendications

1. Matériau, notamment pour accessoire de mode, particulièrement pour une monture ophtalmique, comprenant de l'acétate de cellulose, au moins un plastifiant, et entre 1 et 10%, préférentiellement entre 4 et 6%, en masse dudit matériau, de particules de bois.

2. Matériau selon la revendication 1 **caractérisé en ce que** lesdites particules de bois ont une taille maximale inférieure à 1000 micromètres.

3. Matériau selon l'une quelconque des revendications 1 à 2 **caractérisé en ce que** lesdites particules de bois ont une taille maximale comprise entre 300 et moins de 500 micromètres.

4. Matériau selon l'une quelconque des revendications 1 à 2 **caractérisé en ce que** lesdites particules de bois ont une taille maximale comprise entre 500 et 900 micromètres.

5. Matériau selon l'une quelconque des revendications 1 à 2 **caractérisé en ce que** lesdites particules de bois sont constituées d'un mélange de deux types de particules, le premier type étant des particules de bois d'une taille maximale comprise entre 300 et moins de 500 micromètres et le deuxième type étant des particules de bois d'une taille maximale comprise entre 500 et 900 micromètres, lesdites particules étant présentes respectivement dans un ratio massique compris entre 0,80 et 1,20, préférentiellement entre 0,90 et 1,10.

6. Matériau selon l'une quelconque des revendications 1 à 5 **caractérisé en ce que** l'acétate de cellulose et ledit plastifiant sont pré-mélangés, et **en ce que** la proportion de plastifiant est comprise entre 33 et 39%, préférentiellement entre 35 et 37% en masse dudit mélange d'acétate de cellulose.

7. Matériau selon l'une quelconque des revendications 1 à 6 **caractérisé en ce que** ledit plastifiant est sélectionné parmi le groupe consistant en un ester d'acide citrique et/ou un phosphate organique.

8. Elément de monture ophtalmique comprenant le matériau selon l'une quelconque des revendications 1 à 7.

9. Procédé d'obtention de montures et/ou éléments de montures ophtalmiques **caractérisé en ce qu'**il comprend les étapes suivantes:
• mélange d'acétate de cellulose, d'au moins un plastifiant, et de 1% et 10%, préférentiellement entre 4 et 6%, en masse dudit mélange, de particules de bois,
• mise en fusion dudit mélange,
• extrusion dudit mélange pour l'obtention d'un fil,
• refroidissement dudit fil,
• découpe dudit fil refroidi en granulés,
• injection desdits granulés en plaques,
• refroidissement desdites plaques,
• usinage desdites plaques en montures et/ou éléments de montures ophtalmiques.

10. Utilisation d'un mélange d'acétate de cellulose, d'au moins un plastifiant, et de particules de bois présentes dans une concentration comprise entre 1% et 10%, préférentiellement entre 4 et 6%, en masse dudit matériau pour l'obtention d'éléments de monture ophtalmique.
